(19) Europäisches Patentamt / European Patent Office / Office européen des brevets

(11) **EP 4 734 168 A1**

(12) **EUROPEAN PATENT APPLICATION**
published in accordance with Art. 153(4) EPC

(43) Date of publication:
29.04.2026  Bulletin 2026/18

(21) Application number: 24913497.4

(22) Date of filing: 20.12.2024

(51) International Patent Classification (IPC):
*H01M 4/1397* (2010.01)   *H01M 4/04* (2006.01)
*H01M 4/58* (2010.01)   *H01M 4/66* (2006.01)
*H01M 4/136* (2010.01)   *H01M 10/052* (2010.01)
*H01M 4/02* (2006.01)

(52) Cooperative Patent Classification (CPC):
H01M 4/02; H01M 4/04; H01M 4/136;
H01M 4/1397; H01M 4/58; H01M 4/66;
H01M 10/052; Y02E 60/10

(86) International application number:
PCT/KR2024/020887

(87) International publication number:
WO 2025/143704 (03.07.2025 Gazette 2025/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.12.2023  KR 20230191837

(71) Applicant: **LG Energy Solution, Ltd.**
**Seoul 07335 (KR)**

(72) Inventors:
• **PARK, Young Seok**
  **Daejeon 34122 (KR)**
• **KIM, Seong Soo**
  **Daejeon 34122 (KR)**

(74) Representative: **Plasseraud IP**
**104 Rue de Richelieu**
**CS92104**
**75080 Paris Cedex 02 (FR)**

(54) **METHOD FOR MANUFACTURING POSITIVE ELECTRODE, POSITIVE ELECTRODE, AND LITHIUM SECONDARY BATTERY COMPRISING POSITIVE ELECTRODE**

(57)    The present invention provides a preparation method of a positive electrode including preparing a positive electrode slurry containing a positive electrode active material having a lithium iron phosphate particle in a secondary particle form in which a plurality of primary particles is aggregated; applying the positive electrode slurry onto a positive electrode current collector; and performing rolling on the applied positive electrode slurry to form a positive electrode active material layer, wherein the lithium iron phosphate particle in a secondary particle form has a particle breakage strength of 4 kgf/mm$^2$ to 20 kgf/mm$^2$, and a ratio of a surface roughness Rz$_1$ of the positive electrode current collector before the rolling to a surface roughness Rz$_2$ of the positive electrode current collector after the rolling is 0.5 or less.

[FIG. 1]

5.0kV 7.9mm x10.0k    5.00um

EP 4 734 168 A1

**Description**

## TECHNICAL FIELD

The present invention relates to a preparation method of a positive electrode, a positive electrode, and a lithium secondary battery including the positive electrode.

## BACKGROUND ART

As dependence upon electric energy increases throughout the society with development of a personal IT device and a computer network due to the development of information society, technological development for effective storage and use of the electric energy is required.

A secondary battery is the most suitable technology for many applications among the technologies developed, and among the secondary batteries, there is growing interest in lithium secondary batteries not only capable of miniaturization to be applicable to a personal IT device, etc. but also having the highest energy density.

In general, the lithium secondary battery is prepared by injecting or impregnating a non-aqueous electrolyte into an electrode assembly formed of a positive electrode, a negative electrode, and a porous separator.

As a negative electrode active material of this lithium secondary battery, a carbon-based active material, a silicon-based active material, etc. are considered. Meanwhile, as a positive electrode active material, the use of a lithium-containing cobalt oxide, $LiMnO_2$ with a layered crystal structure, $LiMn_2O_4$ with a spinel crystal structure, a lithium-containing nickel oxide ($LiNiO_2$), etc. is considered. Recently, as a positive electrode active material, the use of a lithium iron phosphate (for example, $LiFePO_4$) active material, which is excellent in thermal stability and relatively inexpensive, is considered.

Meanwhile, an electrode such as a positive electrode, a negative electrode, etc. includes a current collector and an active material layer, and an active material (positive electrode active material or negative electrode active material) is included in the active material layer. At this time, the current collector serves as a passage for transmitting electrons from the outside, or flowing the electrons received from the active material to the outside for electrochemical reaction in the active material layer.

At this time, in order to improve high-rate discharge characteristics of the electrode, increasing the contact area between the current collector and the active material so as to decrease contact resistance is an important task. In this respect, research is conducted for a method of roughening the current collector surface, but for the roughening, applying a separate inorganic material or performing an etching process is required, causing additional process and cost. In addition, even though the roughening process is performed on the current collector, in case that the sizes of the active material and the roughened current collector do not match, pores are rather formed between the active material and the roughened current collector, which acts as a disadvantage in high-rate discharge characteristics.

Meanwhile, in order to increase the contact area between the current collector and the active material, a primer layer having a particular surface roughness may be disposed between the current collector and the active material layer, but the problem is performing additional processes for disposing the primer layer that incur costs, and due to unnecessary volume increase, it is disadvantageous in achieving a desired capacity.

## DISCLOSURE OF THE INVENTION

### TECHNICAL PROBLEM

One task of the present invention is to solve the above problems by providing a preparation method of a positive electrode capable of increasing the contact area between a positive electrode current collector and a positive electrode active material to a significant level, and capable of achieving excellent high-rate discharge characteristics and capacity characteristics.

In addition, another task of the present invention is to provide a positive electrode having excellent high-rate discharge characteristics and capacity characteristics by decreasing the contact resistance between the positive electrode current collector and the positive electrode active material.

In addition, another task of the present invention is to provide a lithium secondary battery including the positive electrode previously described.

### TECHNICAL SOLUTION

[1] The present invention provides a preparation method of a positive electrode including preparing a positive electrode slurry containing a positive electrode active material having a lithium iron phosphate particle in a secondary particle form in which a plurality of primary particles is aggregated; applying the positive electrode slurry onto a positive electrode current collector; and performing rolling on the applied positive electrode slurry to form a positive electrode active material layer, wherein the lithium iron phosphate particle in a secondary particle form has a particle breakage strength of 4 kgf/mm$^2$ to 20 kgf/mm$^2$ and a ratio of a surface roughness $Rz_1$ of the positive electrode current collector before the performing of rolling to a surface roughness $Rz_2$ of the positive electrode current collector after the performing of rolling is 0.5 or less.

[2] The present invention provides the preparation method of a positive electrode of [1] above, wherein, by the preforming of rolling, the positive electrode active material, included in the applied positive electrode slurry, roughens the positive electrode current collector.

[3] The present invention provides the preparation method of a positive electrode of one or more of [1] to [2] above, wherein the lithium iron phosphate particle in a secondary particle form has an average particle diameter ($D_{50}$) of 7 $\mu$m to 30 $\mu$m.

[4] The present invention provides the preparation method of a positive electrode of one or more of [1] to [3] above, wherein the primary particle has an average particle diameter ($D_{50}$) of 0.2 $\mu$m to 3 $\mu$m.

[5] The present invention provides the preparation method of a positive electrode of one or more of [1] to [4] above, wherein, by the performing of rolling on the applied positive electrode slurry, the lithium iron phosphate particle in a secondary particle form is broken into primary particles.

[6] The present invention provides the preparation method of a positive electrode of one or more of [1] to [5] above, wherein, after the performing of rolling, the surface roughness $Rz_2$ of the positive electrode current collector is 3 $\mu$m or greater.

[7] The present invention provides the preparation method of a positive electrode of one or more of [1] to [6] above, wherein, before the performing of rolling, the surface roughness $Rz_1$ of the positive electrode current collector is 1.5 $\mu$m or less.

[8] The present invention provides the preparation method of a positive electrode of one or more of [1] to [7] above, wherein the positive electrode active material layer has a rolling rate of 30% or greater.

[9] The present invention provides the preparation method of a positive electrode of one or more of [1] to [8] above, wherein the rolling is performed through roll press, and during the roll press, a line pressure is 30 kN/cm to 80 kN/cm.

[10] The present invention provides the preparation method of a positive electrode of one or more of [1] to [9] above, wherein the current collector includes aluminum.

[11] The present invention provides the preparation method of a positive electrode of one or more of [1] to [10] above, further including drying the applied positive electrode slurry between the applying of the positive electrode slurry and the performing of rolling on the applied positive electrode slurry.

[12] The present invention provides a positive electrode including a positive electrode current collector; and a positive electrode active material layer disposed on the positive electrode current collector, wherein the positive electrode current collector has a surface roughness $Rz_2$ of 3 $\mu$m or greater, the positive electrode active material layer includes a positive electrode active material, the positive electrode active material contains a lithium iron phosphate particle, and MP resistance, measured using a multi probe resistivity measurement instrument for a sample of the positive electrode punched into a sheet measuring 5 cm wide and 5 cm tall, is 0.1 $\Omega\cdot$cm$^2$ or less.

[13] The present invention provides the positive electrode of [12] above, wherein the positive electrode active material layer has a porosity of 25% to 45%.

[14] The present invention provides the positive electrode of one or more of [12] to [13] above, wherein the lithium iron phosphate particle exists in a primary particle form, or exist as a mixture of a primary particle and a secondary particle.

[15] The present invention provides the positive electrode of one or more of [12] to [14] above, wherein, when the lithium iron phosphate particle is a mixture of a primary particle and a secondary particle, an amount of the primary particle is 90 wt% or greater and less than 100 wt% in the lithium iron phosphate particle.

[16] The present invention provides the positive electrode of one or more of [12] to [15] above, wherein the positive electrode active material layer has a thickness of 50 $\mu$m to 500 $\mu$m.

[17] The present invention provides the positive electrode of one or more of [12] to [16] above, wherein the positive electrode current collector and the positive electrode active material layer are directly in contact with each other.

[18] The present invention provides a lithium secondary battery including the positive electrode according to one or more of [12] to [17] above; a negative electrode opposed to the positive electrode; a separator disposed between the positive electrode and the negative electrode; and a non-aqueous electrolyte.

## ADVANTAGEOUS EFFECTS

According to a preparation method of a positive electrode according to the present invention, a positive electrode active material, containing a lithium iron phosphate particle in a secondary particle form having a particular particle breakage strength, is included in a positive electrode slurry, then rolling of the positive electrode slurry is performed onto a positive electrode current collector to form a positive electrode active material layer, and by the rolling process, the ratio of surface roughness of the current collector before and after the rolling satisfies a particular range. After roughening the positive electrode current collector through the rolling process, the lithium iron phosphate particle in a secondary particle form may become primary particles, thereby increasing the contact area between the positive electrode active material and the positive electrode current collector, and minimizing formation of pores between the positive electrode active material and the positive electrode current collector. Therefore, the positive electrode, implemented in the preparation method of the positive electrode according to the present invention, may have excellent high-rate discharge characteristics, and also have high capacity.

In addition, according to the present invention, the positive electrode is characterized by the surface roughness of the positive electrode current collector satisfying a particular range, and the MP resistance of the positive electrode, measured in a particular condition, satisfying a particular range. The MP resistance satisfying the range may mean a large contact area between the positive electrode active material including the lithium iron phosphate particle and the positive electrode current collector, and low contact resistance. The positive electrode according to the present invention and a lithium secondary battery including the same may have excellent high-rate discharge characteristics, and also have high capacity.

## BRIEF DESCRIPTION OF THE DRAWINGS

FIG. 1 shows a SEM image of a cross section of a positive electrode according to Example 1.
FIG. 2 shows a SEM image of a cross section of a positive electrode according to Comparative Example 1.
FIG. 3 shows a SEM image of a cross section of a positive electrode according to Comparative Example 2.
FIG. 4 shows a SEM image of a cross section of a positive electrode according to Comparative Example 3.
FIG. 5 shows the result of observation using a 3D microscope on a positive electrode current collector according to Example 1.
FIG. 6 shows the result of observation using a 3D microscope on a positive electrode current collector according Comparative Example 1.

## MODE FOR CARRYING OUT THE INVENTION

First, before describing the present invention, it will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

Meanwhile, the terms used in this specification is only used to illustrate example embodiments, and is not intended to limit the present invention. The singular forms are intended to include the plural forms as well unless the context clearly indicates otherwise.

It will be further understood that the terms 'include', 'provide', 'have' or the like, when used in this specification, specify the presence of stated features, integers, steps, elements, or a combination thereof, but do not preclude the presence or addition of one or more other features, integers, steps, elements, or a combination thereof.

In this specification, "%" refers to wt% unless otherwise indicated.

In this specification, an average particle diameter ($D_{50}$) may be defined as a particle diameter corresponding to 50% of a cumulative volume in a particle diameter distribution curve of a particle. The average particle diameter ($D_{50}$) may be measured, for example, using a laser diffraction method. Through the laser diffraction method, the particle diameter in a size from submicron region to several mm may be measured in general, and results of high reproducibility and high decomposition may be obtained.

In this specification, a 'primary particle' refers to one particle, that is, a single particle, and a 'secondary particle' refers to an agglomerate in which the primary particles are aggregated in plurality by an intentional assembly or a binding process.

Hereinafter, the present invention will be described in more detail.

## Preparation Method of Positive Electrode

The present invention provides a preparation method of a positive electrode. In particular, the preparation method of a positive electrode may be a preparation method of a positive electrode for a lithium secondary battery.

In particular, the preparation method of a positive electrode according to the present invention includes preparing a positive electrode slurry containing a positive electrode active material having a lithium iron phosphate particle in a secondary particle form in which a plurality of primary particles is aggregated; applying the positive electrode slurry onto a positive electrode current collector; and performing rolling on the applied positive electrode slurry to form a positive electrode active material layer, and the preparation method is characterized by the lithium iron phosphate particle in a secondary particle form having a particle breakage strength of 4 kgf/mm$^2$ to 20 kgf/mm$^2$ and the ratio of a surface roughness $Rz_1$ of the positive electrode current collector before the performing of rolling to a surface roughness $Rz_2$ of the positive electrode current collector after the performing of rolling being 0.5 or less.

According to the preparation method of a positive electrode according to the present invention, the positive electrode active material, containing the lithium iron phosphate particle in a secondary particle form having a particular particle breakage strength, is included in the positive electrode slurry, then rolling of the positive electrode slurry was performed onto the positive electrode current collector to form the positive electrode active material layer, and by the rolling process, the ratio of surface roughness of the current collector before and after the rolling satisfies a particular range. After the positive electrode current collector is roughened through the rolling process, the lithium iron phosphate particle in a secondary particle form may become primary particles, thereby increasing the contact area between the positive electrode active material and the positive electrode current collector, and minimizing formation of pores between the positive electrode active material and the positive electrode current collector. Therefore, the positive electrode, implemented in the preparation method of the positive electrode according to the present invention, may have excellent high-rate discharge characteristics, and also have high capacity.

According to the preparation method of the positive electrode according to the present invention, first, the positive electrode slurry is prepared.

The positive electrode slurry includes a positive electrode active material. The positive electrode active material includes a lithium iron phosphate particle in a secondary particle form in which a plurality of primary particles is aggregated.

The lithium iron phosphate particle may include a compound represented by Chemical Formula A below.

[Chemical Formula A] $\quad\quad Li_{1+a}Fe_{1-s}M_s(PO_{4-b})X_b$

In Chemical Formula A above, M is one or more element selected from Co, Ni, Mn, Al, Mg, Ti, and V, X is F, S, or N, and $0 \leq s \leq 0.5$; $-0.5 \leq a \leq +0.5$; and $0 \leq b \leq 0.1$.

Chemical Formula A above may be expressed particularly by $LiFePO_4$ (a=0, s=0, and b=0).

The positive electrode active material includes a lithium iron phosphate particle in a secondary particle form in which a plurality of primary particles is aggregated. The positive electrode active material at this time may refer to a positive electrode active material before application of the positive electrode slurry, or a positive electrode active material before rolling of the applied positive electrode slurry.

The lithium iron phosphate particle in a secondary particle form has a particle breakage strength (or compression breaking strength) of 4 kgf/mm$^2$ to 20 kgf/mm$^2$. As the above range is satisfied, when rolling is performed on the applied positive electrode slurry, to be described later, the lithium iron phosphate particle in a secondary particle form may roughen the positive electrode current collector and then may be broken into primary particles, and the contact area of the roughened positive electrode current collector may be maximized, thereby improving high-rate discharge characteristics of the positive electrode significantly. Preferably, the particle breakage strength of the lithium iron phosphate particle in a secondary particle form may be 5 kgf/mm$^{2-}$ to 15 kgf/mm$^{2-}$, and particularly 8 kgf/mm$^{2-}$ to 12 kgf/mm$^{2-}$.

If the particle breakage strength of the lithium iron phosphate particle in a secondary particle form is less than 4 kgf/mm$^2$, breakage occurs before the roughening of the positive electrode current collector through the lithium iron phosphate particle, so that a desired effect of roughening the positive electrode current collector or increasing the contact area between the positive electrode active material and the current collector may not be exhibited. In addition, if the particle breakage strength of the lithium iron phosphate particle in a secondary particle form is greater than 20 kgf/mm$^2$, the particle does not break even by the rolling, so that the contact area between the positive electrode active material and the positive electrode current collector is rather reduced, causing a problem that pores are formed between the positive electrode active material and the positive electrode current collector.

In the present invention, the particle breakage strength (St) was measured using a micro compression tester (MCT-W of Shimadzu), and the value may be calculated by the Hiramatsu equation (Reference [The Journal of the Mining and Metallurgical Institute of Japan Vol. 81, No. 932, Issue. December 1965, Pages 1024-1030]), expressed by Mathematical Equation 1 below.

[Mathematical Equation 1]

$$St=0.28P/\pi d^2$$

(P: weight applied to particle [kgf], d: particle diameter (mm))

Particular measurement conditions are as follows.

1. Test particle: FLAT50
2. Measuring mode: Compression test
3. Weight applied to particle: 20.00 [mN]
4. Loading rate: 0.892405[mN]/sec

The lithium iron phosphate particle in a secondary particle form may have an average particle diameter ($D_{50}$) of 7 $\mu$m to 30 $\mu$m, particularly of 10 $\mu$m to 20 $\mu$m, and more particularly of 12 $\mu$m to 18 $\mu$m. In addition, the primary particle may have an average particle diameter ($D_{50}$) of 0.2 $\mu$m to 3.0 $\mu$m, particularly of 0.2 $\mu$m to 2.0 $\mu$m, more particularly of 0.3 $\mu$m to 1.5 $\mu$m, and even more particularly of 0.3 $\mu$m to 1 $\mu$m.

The positive electrode active material may further include a carbon coating layer positioned on a surface of the lithium iron phosphate particle. The carbon coating layer may be used for the purpose of protecting the lithium iron phosphate particle, improving electrical conductivity, etc.

The positive electrode active material may be included in the positive electrode slurry in an amount of 80 wt% to 99 wt% on the basis of the weight of solid content of the positive electrode slurry.

The positive electrode slurry may further include a binder, a conductive material, and/or a solvent together with the positive electrode active material.

The binder is a component that assists binding between the active material and the conductive material, etc., and binding to the current collector, and may include at least one selected from the group consisting of, specifically, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene ter polymer (EPDM), a sulfonated EPDM, a styrene-butadiene rubber, and fluorine rubber, and may preferably include polyvinylidene fluoride.

The binder may be included in an amount of 1 wt% to 20 wt%, and preferably in an amount of 1.2 wt% to 10 wt% in the positive electrode slurry on the basis of the weight of solid content of the positive electrode slurry in terms of securing sufficient binding force between the components such as the positive electrode active material.

The conductive material may be used to assist and improve conductivity of a secondary battery, and is not particularly limited as long as it does to cause chemical change and has conductivity. Particularly, the conductive material may include at least one selected from the group consisting of graphite such as natural graphite or artificial graphite; carbon black including carbon black, acetylene black, KETJENBLACK®, channel black, furnace black, lamp black, thermal black, etc.; a conductive fiber such as a carbon fiber or a metal fiber; a conductive tube such as a carbon nanotube; fluorocarbon; metal powder including aluminum powder, nickel powder, etc.; a conductive whisker including zinc oxide, potassium titanate, etc.; a conductive metal oxide such as titanium oxide; and a polyphenylene derivative.

The conductive material may be included in the positive electrode slurry in an amount of 1 wt% to 20 wt%, and preferably in an amount of 1.2 wt% to 10 wt% on the basis of the weight of solid content of the positive electrode slurry in terms of securing sufficient electrical conductivity.

The solvent may include an organic solvent such as N-methyl-2-pyrrolidone (NMP).

The positive electrode slurry may have a solid content of 40 wt% to 90 wt%, and particularly 50 wt% to 80 wt%.

Next, the positive electrode slurry is applied onto the positive electrode current collector.

The positive electrode slurry may be applied onto at least one side of the positive electrode current collector, and particularly, applied onto one side or both sides of the positive electrode current collector.

The positive electrode current collector may generally have a thickness of 3 to 500 $\mu$m, more particularly of 5 $\mu$m to 30 $\mu$m, and more particularly of 10 $\mu$m to 25 $\mu$m.

The positive electrode current collector is not particularly limited as long as it does not cause chemical change in a battery, and has high conductivity. In particular, for the positive electrode current collector, aluminum, stainless steel, copper, nickel, titanium, calcined carbon, copper or stainless steel that is surface-treated with carbon, nickel, titanium, silver, etc., an aluminum-cadmium alloy, etc. may be used. More particularly, the positive electrode current collector may include aluminum.

For the application of the positive electrode slurry, methods publicly known in the relevant art, such as a spray coating method, a spin coating method, and a doctor blade method, may be used without limitation.

Next, rolling is performed on the applied positive electrode slurry to form a positive electrode active material layer.

By the rolling, the positive electrode active material (lithium iron phosphate particle in a secondary particle form), included in the applied positive electrode slurry, may roughen the positive electrode current collector. By the rolling process, the lithium iron phosphate particle in a secondary particle form may roughen or form an uneven structure by pressing the positive electrode current collector. In addition, by the rolling process, the lithium iron phosphate particle in a secondary particle form may become primary particles after roughening the positive electrode current collector. In particular, since the lithium iron phosphate particle in a secondary particle form has a particle breakage strength in the level previously described, the lithium iron phosphate particle may break after roughening the positive electrode current collector to a sufficient level, so that formation of pores between the positive electrode active material and the current collector may be minimized, and the contact area between the positive electrode active material and the current collector may increase significantly.

In the present invention, drying the applied positive electrode slurry may be further included between the applying of the positive electrode slurry and the performing of rolling on the applied positive electrode slurry.

The drying may be performed at 80 °C to 150 °C, but is not limited thereto.

In the rolling, the positive electrode active material layer may have a rolling rate of 30% or greater, particularly, 30% to 50%, and more particularly, 35% to 48%. Within the above range, the roughening may occur sufficiently as the positive electrode current collector is pressed by the positive electrode active material, and the lithium iron phosphate particle may become primary particles sufficiently, thereby minimizing the formation of pores between the active material and the current collector.

The rolling rate may be calculated by Mathematical Equation 2 below.

$$\text{Rolling rate (\%)} = \{ \text{(thickness of positive electrode active material layer before rolling - thickness of positive electrode active material layer after rolling) / thickness of positive electrode active material layer before rolling} \} \times 100 \qquad \text{[Mathematical Equation 2]}$$

In Mathematical Equation 2 above, the thickness of the positive electrode active material layer before rolling may refer to a thickness of the applied positive electrode slurry or a thickness of the dried positive electrode slurry.

The rolling may be performed through roll press. In particular, the roll-press process may be performed by passing the positive electrode between two rolls, and the rolling rate may be adjusted by adjusting a gap between the two rolls.

A line pressure during the roll press may be 30 kN/cm to 80 kN/cm, and particularly, 40 kN/cm to 60 kN/cm.

In the present invention, a ratio of a surface roughness $Rz_1$ of the positive electrode current collector before the rolling to a surface roughness $Rz_2$ of the positive electrode current collector after the rolling is 0.5 or less. When the ratio of the surface roughness $Rz_1$ of the positive electrode current collector before the rolling to the surface roughness $Rz_2$ of the positive electrode current collector after the rolling is greater than 0.5, the roughening of the positive electrode current collector, by applying the press of the lithium iron phosphate particle in a secondary particle form onto the positive electrode current collector, does not occur sufficiently, and thus, it is difficult to achieve a desired improvement in contact area between the positive electrode active material and the positive electrode current collector and a desired improvement in high-rate discharge performance. In particular, it may be difficult to achieve change in surface roughness within the above-described range of ratio though a method such as an etching of the positive electrode current collector, and the change in surface roughness may be achieved through the previously-described method in which the positive electrode current collector is pressed by the lithium iron phosphate particle in a secondary particle form having a particular particle breakage strength, the particle is broken, etc. The ratio of the surface roughness $Rz_1$ of the positive electrode current collector before the rolling to the surface roughness $Rz_2$ of the positive electrode current collector after the rolling may be particularly 0.4 or less, more particularly 0.35 or less, and even more particularly 0.38 or less. Meanwhile, in case of using the lithium iron phosphate particle in a secondary particle form having an excessively high particle breakage strength, the change in surface roughness in the level previously described may be achieved to some extent, but the contact area between the positive electrode active material and the positive electrode current collector may decrease, causing a problem of increasing the resistance due to formation of pores between the positive electrode active material and the positive electrode current collector, etc.

In this specification, the surface roughness (Rz) may be measured using an optical profiler of NanoSystem Co., Ltd. In particular, using the optical profiler, the surface roughness is measured through a Topo image obtained by selecting 5 measuring regions for each sample at the measurement magnification (for example 500 times).

Meanwhile, the surface roughness $Rz_2$ of the positive electrode current collector after the rolling may be measured after the prepared positive electrode is soaked in a solvent (for example, NMP), heated at 80 °C to 150 °C (particularly, 100 °C) for 1 hour to 10 hours (particularly, 2 hours), and the positive electrode active material layer is separated and removed to obtain the positive electrode current collector.

The surface roughness $Rz_2$ of the positive electrode current collector after the rolling may be 3 μm or greater, particularly 4 μm to 1000 μm, more particularly 4 μm to 500 μm, and even more particularly 4 μm to 20 μm. The surface

roughness $Rz_1$ of the positive electrode current collector before the rolling may be 1.5 $\mu$m or less, more particularly 0.5 $\mu$m to 1.5um, and more particularly 1 $\mu$m to 1.5 $\mu$m.

The positive electrode active material layer may have a thickness of 50 $\mu$m to 500 $\mu$m, particularly of 100 $\mu$m to 300 $\mu$m, and more particularly of 100 $\mu$m to 200 $\mu$m.

## Positive Electrode

In addition, the present invention provides a positive electrode, particularly a positive electrode for a lithium secondary battery. In particular, the positive electrode may be a positive electrode prepared in the preparation method of a positive electrode previously described.

In particular, the positive electrode is a positive electrode including a positive electrode current collector; and a positive electrode active material layer disposed on the positive electrode current collector, wherein the positive electrode current collector has a surface roughness $Rz_2$ of 3 $\mu$m or greater, the positive electrode active material layer contains a positive electrode active material, the positive electrode active material contains a lithium iron phosphate particle, and MP resistance, measured using a multi probe resistivity measurement instrument for a sample of the positive electrode punched into a sheet measuring 5 cm wide and 5 cm tall, is 0.1 $\Omega \cdot cm^2$ or less.

In the positive electrode according to the present invention, the surface roughness $Rz_2$ of the positive electrode current collector is 3 $\mu$m or greater, and the MP resistance satisfies a particular range, which may mean that the positive electrode having such characteristics has a large contact area between the positive electrode active material and the positive electrode current collector, and pores formed therebetween are minimized, and accordingly, it is possible to achieve the positive electrode and a lithium secondary battery with excellent high-rate discharge characteristics.

The surface roughness $Rz_2$ of the positive electrode current collector may be 3 $\mu$m or greater, particularly 4 $\mu$m to 1000 $\mu$m, more particularly 4 $\mu$m to 500 $\mu$m, and even more particularly 4 $\mu$m to 20 $\mu$m. If the surface roughness $Rz_2$ of the positive electrode current collector is less than 3 $\mu$m, roughening of the positive electrode current collector does not occur sufficiently, and therefore, it is difficult to achieve a desired improvement in contact area between the positive electrode active material and the positive electrode current collector, and a desired improvement in high-rate discharge performance.

Description on the positive electrode current collector is the same as previously described.

The positive electrode active material layer is disposed on the positive electrode current collector. The positive electrode active material layer may be disposed particularly on at least one side of the positive electrode current collector, and more particularly, disposed on one side or both sides of the positive electrode current collector.

In particular, the positive electrode current collector and the positive electrode active material layer may be directly in contact with each other. More particularly, the positive electrode current collector and the positive electrode active material layer may be directly in contact with each other without another substrate such as a primer layer being disposed therebetween.

The positive electrode active material includes a lithium iron phosphate particle.

The lithium iron phosphate particle may exist in a primary particle form or exist as a mixture of a primary particle and a secondary particle. If the lithium iron phosphate particle is the mixture of a primary particle and a secondary particle, the amount of the primary particle may be 90 wt% or greater and less than 100 wt%, and more particularly 95 wt% or greater and less than 100 wt% in the lithium iron phosphate particle.

In the lithium iron phosphate particle, the average particle diameter ($D_{50}$) of the secondary particle may be 7 $\mu$m to 30 $\mu$m, particularly of 10 $\mu$m to 20 $\mu$m, and more particularly of 12 $\mu$m to 18 $\mu$m. In addition, the primary particle may have an average particle diameter ($D_{50}$) of 0.2 $\mu$m to 3.0 $\mu$m, particularly of 0.2 $\mu$m to 2.0 $\mu$m, more particularly of 0.3 $\mu$m to 1.5 $\mu$m, and even more particularly of 0.3 $\mu$m to 1 $\mu$m.

The rest of the descriptions on the positive electrode active material are the same as previously described.

The positive electrode active material layer may further include a binder and/or a conductive material, together with the positive electrode active material.

The binder is a component that assists binding between the active material and the conductive material, etc., and binding to the current collector, and may include at least one selected from the group consisting of, specifically, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene ter polymer (EPDM), a sulfonated EPDM, a styrene-butadiene rubber, and fluorine rubber, and may preferably include polyvinylidene fluoride.

The binder may be included in an amount of 1 wt% to 20 wt%, and preferably in an amount of 1.2 wt% to 10 wt% on the basis of the weight of the positive electrode active material layer in terms of securing sufficient binding force between the components such as the positive electrode active material.

The conductive material may be used to assist and improve conductivity of the secondary battery, and is not particularly limited as long as it does to cause chemical change and has conductivity. In particular, the conductive material may include at least one selected from the group consisting of graphite such as natural graphite or artificial graphite; carbon black including carbon black, acetylene black, KETJENBLACK®, channel black, furnace black, lamp black, thermal black, etc.; a conductive fiber such as a carbon fiber or a metal fiber; a conductive tube such as a carbon nanotube; fluorocarbon; metal powder including aluminum powder, nickel powder, etc.; a conductive whisker including zinc oxide, potassium titanate, etc.; a conductive metal oxide such as titanium oxide; and a polyphenylene derivative.

The conductive material may be included in an amount of 1 wt% to 20 wt%, and preferably in an amount of 1.2 wt% to 10 wt% on the basis of the weight of the positive electrode active material layer in terms of securing sufficient electrical conductivity.

The rest of the descriptions on the positive electrode active material layer is the same as previously described.

The positive electrode is punched into a sample in the form of a sheet measuring 5 cm wide and 5 cm tall to measure the MP resistance using a multi probe resistivity measurement instrument, and the MP resistance is 0.1 $\Omega \cdot cm^2$ or less. If the MP resistance is greater than 0.1 $\Omega \cdot cm^2$, it may be evaluated that the contact area between the positive electrode current collector and the positive electrode active material is not sufficiently secured, and accordingly, it is difficult to achieve a desired improvement in high-rate discharge performance.

The MP resistance may be 0.1 $\Omega \cdot cm^2$ or less, particularly, 0.01 $\Omega \cdot cm^2$ to 0.1 $\Omega \cdot cm^2$, and more particularly, 0.01 $\Omega \cdot cm^2$ to 0.07 $\Omega \cdot cm^2$.

The method of implementing the above range of MP resistance is not particularly limited, and for example, various methods, such as adjusting the surface roughness of the positive electrode current collector to the level previously described, or adjusting the average particle diameter ($D_{50}$) of the lithium iron phosphate particle to be used, etc., may be used. In particular, the implementation of the MP resistance range may also be made by the preparation method of the positive electrode previously described.

The positive electrode may have a porosity of 25% to 45%, and particularly 30% to 40%. When the above range is satisfied, a movement path of lithium ions in the positive electrode active material may be sufficiently secured, and the contact areas between the positive electrode active material and the positive electrode active material or between the positive electrode active material and the positive electrode current collector may be improved, so that it may be advantageous in improving high-rate discharge performance.

The porosity of the positive electrode may be calculated by Mathematical Equation 3 below.

$$\text{Porosity (\%)} = \{1-(\text{electrode density of positive electrode/true density of positive electrode})\} \times 100 \qquad \text{[Mathematical Equation 3]}$$

In Mathematical Equation 3 above, the true density of the positive electrode is a density of the positive electrode active material layer measured when the positive electrode, taken of a certain size, is pressed using a press equipment until the thickness of the positive electrode no longer changes, and the electrode density of the positive electrode is a density of the positive electrode active material layer measured for the positive electrode taken of a certain size.

## Lithium Secondary Battery

In addition, the present invention provides a lithium secondary battery. In particular, the lithium secondary battery may include the positive electrode previously described.

More particularly, the lithium secondary battery includes a positive electrode; a negative electrode opposed to the positive electrode; a separator disposed between the positive electrode and the negative electrode, and a non-aqueous electrolyte.

The lithium secondary battery may be prepared in a method including preparing an electrode assembly containing the positive electrode, the negative electrode, and the separator; accommodating the electrode assembly in a battery case; preparing a non-aqueous electrolyte containing a lithium salt, an organic solvent, and an additive; and injecting or impregnating the non-aqueous electrolyte into the battery case.

Since the positive electrode is previously described, the other components will be described in the following.

(1) Negative Electrode

The negative electrode may be opposed to the positive electrode.

The negative electrode includes a negative electrode active material.

The negative electrode may include a negative electrode current collector; and a negative electrode active material layer disposed on at least one side of the negative electrode current collector. At this time, the negative electrode active material may be included in the negative electrode active material layer.

The negative electrode current collector is not particularly limited as long as it does not cause chemical change in a battery, and has high conductivity. Particularly, as the negative electrode current collector, copper, stainless steel, aluminum, nickel, titanium, calcined carbon, copper or stainless steel that is surface-treated with carbon, nickel, titanium, silver, etc., an aluminum-cadmium alloy, etc. may be used.

The negative electrode current collector may generally have a thickness of 3 to 500 $\mu$m.

The negative electrode current collector may also have microscopic irregularities on a surface to strengthen binding force of the negative electrode active material. For example, the negative electrode current collector may be used in various forms including a film, a sheet, a foil, a net, a porous body, a foam body, a non-woven fabric body, etc.

The negative electrode active material layer is disposed on at least one side of the negative electrode current collector. In particular, the negative electrode active material layer may be disposed on one side or both sides of the negative electrode current collector.

The negative electrode active material layer may include the negative electrode active material.

The negative electrode active material is a material capable of reversibly intercalating/deintercalating lithium ions, and may include at least one selected from the group consisting of a carbon-based active material, a (semi) metal-based active material, and lithium metal, and specifically, may include at least one selected from a carbon-based active material and a (semi) metal-based active material.

The carbon-based active material may include at least one selected from the group consisting of graphite, hard carbon, soft carbon, carbon black, graphene, and fibrous carbon, and may preferably include graphite. The graphite may include at least one selected from the group consisting of artificial graphite and natural graphite.

The carbon-based active material may have an average particle diameter ($D_{50}$) of 5 $\mu$m to 30 $\mu$m, and preferably 7 $\mu$m to 15 $\mu$m in terms of improving structural stability during charging and discharging, and reducing side reactions with an electrolyte solution.

In particular, the (semi) metal-based active material may include at least one (semi) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (semi) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); lithium vanadium oxide, etc.

More particularly, the (semi) metal-based active material may include a silicon-based active material.

The silicon-based active material may include a compound represented by $SiO_x(0 \leq x < 2)$. Since $SiO_2$ does not react to lithium ions, lithium may not be stored, so that it is preferred that x falls within the above range, and more preferably, the silicon-based active material may be SiO.

The silicon-based active material may have an average particle diameter ($D_{50}$) of 1 $\mu$m to 30 $\mu$m, and preferably 2 $\mu$m to 15 $\mu$m in terms of improving structural stability during charging and discharging, and reducing side reactions with an electrolyte solution.

The negative electrode active material may be included in an amount of 60 wt% to 99 wt%, and preferably in an amount of 75 wt% to 95 wt% in the negative electrode active material layer.

The negative electrode active material layer may further include a binder, a conductive material, and/or a thickener together with the negative electrode active material.

The binder is used to improve performance of a battery by improving adhesion of the negative electrode active material layer to the negative electrode current collector, and may include at least any one selected from the group consisting of, for example, polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, an ethylene-propylene-diene monomer (EPDM), sulfonated EPDM, a styrene-butadiene rubber (SBR), fluorine rubber, and materials with hydrogen thereof being substituted with Li, Na, Ca, or the like, and may also include various copolymers thereof.

The binder may be included in an amount of 0.5 wt% to 10 wt%, and preferably 1 wt% to 5 wt% in the negative electrode active material layer.

The conductive material may not be particularly limited as long as it does not cause chemical change in the relevant battery and has conductivity, and for example, graphite such as natural graphite or artificial graphite; carbon black including carbon black, acetylene black, KETJENBLACK®, channel black, furnace black, lamp black, thermal black, etc.; a conductive fiber such as a carbon fiber or metal fiber; a conductive tube such as a carbon nanotube; fluorocarbon; metal powder including aluminum power, nickel powder, etc.; a conductive whisker including zinc oxide, potassium titanate, etc.; a conductive metal oxide such as titanium oxide; a conductive material such as a polyphenylene derivative, etc. may be used.

The conductive material may be included in an amount of 0.5 wt% to 10 wt%, and preferably in an amount of 1 wt% to 5 wt% in the negative electrode active material layer.

The negative electrode active material layer may have a thickness of 50 $\mu$m to 300 $\mu$m, and preferably 100 $\mu$m to

200 µm.

A negative electrode slurry including the negative electrode active material, the binder, the conductive material, and/or a solvent for negative electrode slurry formation may be applied onto at least one side of the negative electrode current collector, and then dried and pressed to prepare the negative electrode.

The solvent for the negative electrode slurry formation may include at least one selected from the group consisting of distilled water, N-methyl-2-pyrrolidone (NMP), ethanol, methanol, and isopropyl alcohol, and may preferably include distilled water, in terms of facilitating dispersion of, for example, the negative electrode active material, the binder, and/or conductive material. The negative electrode slurry may have a solid content of 30 wt% to 80 wt%, and particularly 40 wt% to 70 wt%.

(2) Separator

The separator may be disposed between the positive electrode and the negative electrode.

As the separator, a general porous polymer film, conventionally used as a separator, for example, a porous polymer film made of a polyolefin polymer such as an ethylene homo-copolymer, a propylene homo-copolymer, an ethylene/butene copolymer, an ethylene/hexene copolymer, and an ethylene/methacrylate copolymer may be used alone, or used in a stack thereof, or a general porous non-woven fabric, for example, a non-woven fabric made of glass fiber with high meting point, polyethylene terephthalate fiber, etc. may be used, but an embodiment of the present invention is not limited thereto. Furthermore, a coated separator including a ceramic component or a polymer material may also be used in order to secure heat resistance or mechanical strength, and selectively may be used in a single-layer or multi-layer structure.

(3) Non-Aqueous Electrolyte

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not limited thereto.

In particular, the electrolyte may include an organic solvent and a lithium salt.

Any compound capable of providing lithium ions that are used in a lithium secondary battery may be used for the lithium salt without particular limitation. In particular, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. When the concentration of lithium salt falls within the above ranges, the electrolyte may have appropriate conductivity and viscosity, and therefore, excellent performance of the electrolyte may be exhibited, and lithium ions may move effectively.

The organic solvent may include at least one selected from linear carbonate, cyclic carbonate, linear ester, cyclic ester, ether, glyme, and nitrile.

The linear carbonate may include at least one selected from the group consisting of dimethyl carbonate (DMC), diethyl carbonate (DEC), dipropyl carbonate, ethylmethyl carbonate (EMC), methyl propyl carbonate, and ethylpropyl carbonate.

The cyclic carbonate may include at least one selected from the group consisting of ethylene carbonate (EC), propylene carbonate (PC), 1,2-butylene carbonate, 2,3-butylene carbonate. 1,2-pentylene carbonate, and 2,3-pentylene carbonate.

Specific examples of the linear ester may be methyl acetate, ethyl acetate, propyl acetate, methyl propionate, ethyl propionate, propyl propionate, and butyl propionate, but the example is not limited thereto.

Specific examples of the cyclic ester may be γ-butyrolactone, γ-valerolactone, γ-caprolactone, σ-valerolactone, ε-caprolactone, etc., but the example is not limited thereto.

Specific examples of the ether may be dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), etc., but the example is not limited thereto.

Specific examples of the glyme may be dimethoxyethane (glyme, DME), diethoxyethane, diglyme, triglyme, and tetra-glyme (TEGDME), etc., but the example is not limited thereto.

Specific examples of the nitrile may be acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, etc., but the example is not limited thereto.

The electrolyte may further include an additive together with the lithium salt and the organic solvent.

The additive may include at least one selected from the group consisting of vinylethylene carbonate, propane sultone, lithium tetrafluoro borate ($LiBF_4$), lithium difluoro(oxalato)borate (LiODFB), 1,3,6-hexane tri-cyanide (HTCN), and sodium superoxide ($NaO_2$), and may include, specifically, fluoroethylene carbonate, difluoroethylene carbonate, vinylethylene carbonate, propane sultone, lithium tetrafluoro borate ($LiBF_4$), lithium difluoro(oxalato)borate (LiODFB), 1,3,6-hexane tri-cyanide (HTCN), succinonitrile, 1,4-dicyano-2-butene, adiponitrile, lithium difluoro phosphate ($LiPO_2F_2$), and sodium superoxide ($NaO_2$).

The lithium secondary battery according to the present invention, as above, may be useful in the field of mobile devices such as a mobile phone, a laptop computer, and a digital camera, and in the field of electric vehicles such as a hybrid electric vehicle (HEV).

Therefore, according to another embodiment of the present invention, a battery module including the lithium secondary battery as a unit cell and a battery pack including the battery module are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

An outer shape of the lithium secondary battery of the present invention is not particularly limited, but may include a cylindrical type using a can, a prismatic type, a pouch type, a coin type, or the like.

The lithium secondary battery according to the present invention may not only be used in a battery cell that is used as a power source of a small device, but may also be preferably used as a unit battery in a medium and large-sized battery module including a plurality of battery cells.

Hereinafter, the present invention is described in detail through examples.

At this time, the examples according to the present invention may be modified into various other forms, and the scope of the present invention should not be construed as being limited to the examples to be described in detail below. The examples of the present invention are provided to more completely explain the present invention to those with average knowledge in the art.

Hereinafter, the present invention is described in detail through particular examples.

## Examples

### Example 1

(Preparation of Positive Electrode)

A lithium iron phosphate ($LiFePO_4$) particle as a positive electrode active material, a carbon nanotube as a conductive material, and polyvinylidene fluoride (PVdF) as a binder were added to N-methyl-2-pyrrolidone (NMP) that is a solvent in a weight ratio of 96.5:1.0:2.5 to prepare a positive electrode slurry. At this time, the lithium iron phosphate particle had a secondary particle form, and the average particle diameter ($D_{50}$) of the secondary particle was 16 $\mu$m, and the average particle diameter ($D_{50}$) of a primary particle was 0.4 $\mu$m. In addition, the particle breakage strength of the lithium iron phosphate particle in a secondary particle form was 10 kgf/mm$^2$.

The positive electrode slurry was applied onto a positive electrode current collector (Al thin film), having a thickness of 20 $\mu$m and a surface roughness $Rz_1$ of 1.5 $\mu$m, in a loading amount of 330 mg/25 cm$^2$, and dried.

Thereafter, roll press was performed at a line pressure of 50 kN/cm to prepare a positive electrode (thickness of positive electrode active material: 120 $\mu$m). At this time, the positive electrode had a rolling rate of 46%, and porosity of 33%.

### Comparative Example 1

A positive electrode was prepared in the same method as that of Example 1, except that a lithium iron phosphate ($LiFePO_4$) particle in a primary particle form was used as a positive electrode active material. The lithium iron phosphate ($LiFePO_4$) particle in a primary particle form, used in Comparative Example 1, had an average particle diameter ($D_{50}$) of 0.9 $\mu$m, and had a particle breakage strength of 50 kgf/mm$^2$. At this time, the positive electrode had a rolling rate of 50%, and porosity of 33%.

### Comparative Example 2

A positive electrode was prepared in the same method as that of Example 1, except that a lithium iron phosphate particle in a secondary particle form was used as a positive electrode active material, but the average particle diameter ($D_{50}$) of the secondary particle was 16 $\mu$m, the average particle diameter ($D_{50}$) of the primary particle was 0.4 $\mu$m, and the particle breakage strength of the lithium iron phosphate particle in the secondary particle form was 1.5 kgf/mm$^2$. At this time, the positive electrode had a rolling rate of 46%, and porosity of 33%.

**Comparative Example 3**

A positive electrode was prepared in the same method as that of Example 1, except that a lithium iron phosphate particle in a secondary particle form was used as a positive electrode active material, but the average particle diameter ($D_{50}$) of the secondary particle was 13 $\mu$m, the average particle diameter ($D_{50}$) of the primary particle was 0.2 $\mu$m, and the particle breakage strength of the lithium iron phosphate particle in the secondary particle form was 25 kgf/mm$^2$. At this time, the positive electrode had a rolling rate of 46%, and porosity of 33%.

**Experimental Example**

Experimental Example 1: Measurement of Surface Roughness $Rz_2$ of Positive Electrode Current Collector After Rolling
The positive electrodes according to Example 1 and Comparative Examples 1 to 3 were soaked in an NMP solvent, then heated at 100 °C for 2 hours, and the positive electrode active material layers were separated and removed. Using the optical profiler of NanoSystem, Co., Ltd, the surface roughness $Rz_2$ was measured through a Topo image obtained by selecting 5 measuring regions for each sample at the measurement magnification (for example, 500 times).
The results were listed in Table 1 below.

[Table 1]

|  | $Rz_1$ | $Rz_2$ | $Rz_1/ Rz_2$ |
|---|---|---|---|
| Example 1 | 1.5 | 5.0 | 0.30 |
| Comparative Example 1 | 1.5 | 1.8 | 0.83 |
| Comparative Example 2 | 1.5 | 1.9 | 0.79 |
| Comparative Example 3 | 1.5 | 5.0 | 0.30 |

Referring to Table 1 above, in case of Example 1, where the lithium iron phosphate particle in a secondary particle form was used as a positive electrode active material, and the particle breakage strength satisfied a particular range, it can be seen that, unlike the case of the comparative examples, the surface roughness $Rz_2$ and $Rz_1/Rz_2$ of the positive electrode current collector after the rolling satisfied the range of the present invention, and through this, it can be seen that the positive electrode current collector was roughened to an excellent level by performing the rolling using the lithium iron phosphate particle in a secondary particle form. In addition, through this, the contact area between the positive electrode active material and the positive electrode current collector was improved, and therefore, it can be expected that excellent high-rate discharge characteristics are exhibited.

Experimental Example 2: SEM Image Observation

A cross section of each of the positive electrodes according to Example 1, Comparative Example 1, and Comparative Example 3 was observed using a scanning electron microscope (SEM).

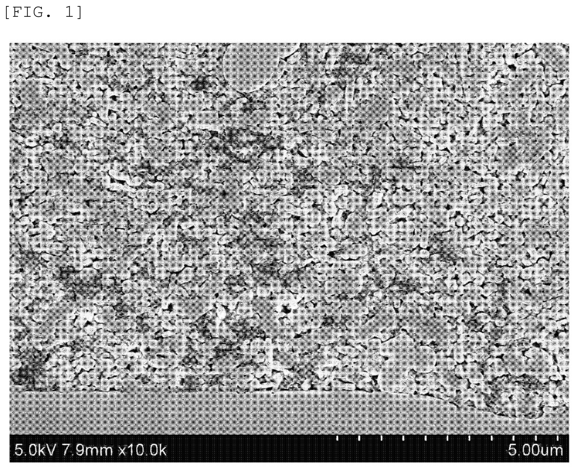

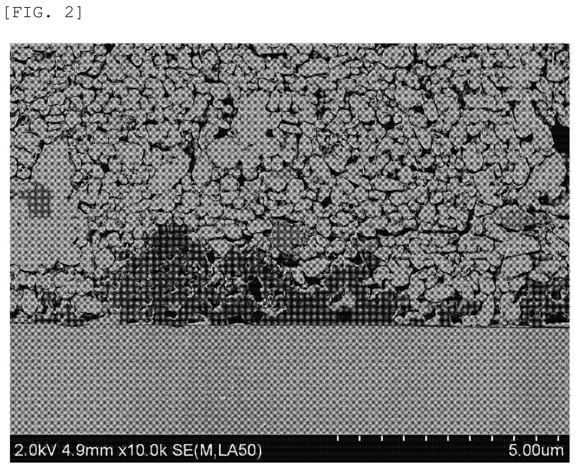

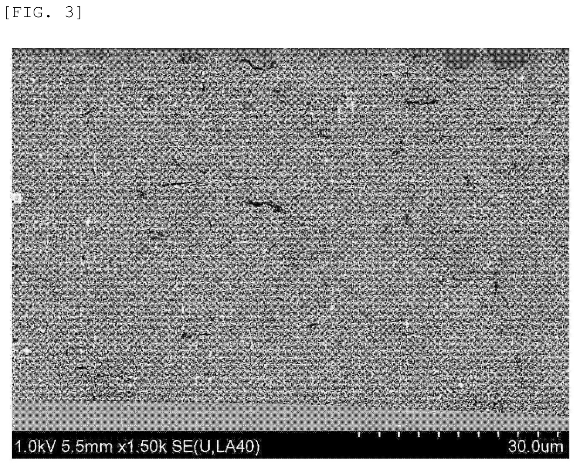

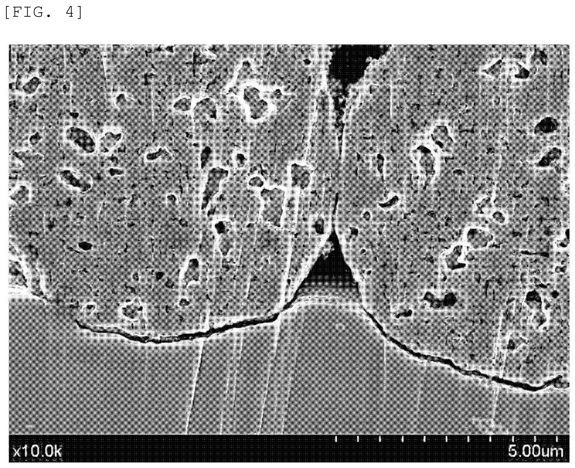

FIG. 1 showed the cross-sectional SEM image of the positive electrode according to Example 1, FIG. 2 showed the cross-sectional SEM image of the positive electrode according to Comparative Example 1, FIG. 3 showed the cross-sectional SEM image of the positive electrode according to Comparative Example 2, and FIG. 4 showed the cross-sectional SEM image of the positive electrode according to Comparative Example 3.
Referring to FIGS. 1 to 4, in the positive electrode according to Example 1, it can be seen that the lithium iron phosphate particles in a secondary particle form was all broken into primary particles, and the particles which turned into primary particles were in contact with the current collector. In the positive electrode according to Comparative Example 1, since the lithium iron phosphate particle in a primary particle form was used, and the particles press the current collector in a uniform level in the rolling, roughening of the current collector was not done well. In case of the positive electrode according to Comparative Example 2, since the particle was broken before roughening of the current collector in the rolling for preparing the positive electrode, the roughening of the current collector was not done well. In the positive electrode according to Comparative Example 3, a certain level of roughening of the positive electrode current collector was observed, but the lithium iron phosphate particle in a secondary particle form was not broken, so that pores were observed between the positive electrode active material and the positive electrode current collector.
In case that the roughening of the current collector was not done well as in Comparative Examples 1 and 2, or in case that the pores were formed between the positive electrode active material and the current collector as in Comparative Example 3, the contact area between the positive electrode active material and the current collector was not sufficiently secured, so that deterioration in battery performance, such as resistance characteristics, may be caused.

Experimental Example 3: 3D Microscope Observation

The positive electrodes according to Example 1 and Comparative Example 1 were soaked in an NMP solvent, then heated at 100 °C for 2 hours, and the positive electrode active material layers were separated and removed to obtain positive electrode current collectors.
Thereafter, using a 3D microscope, the surfaces of the positive electrode current collectors after rolling were observed.

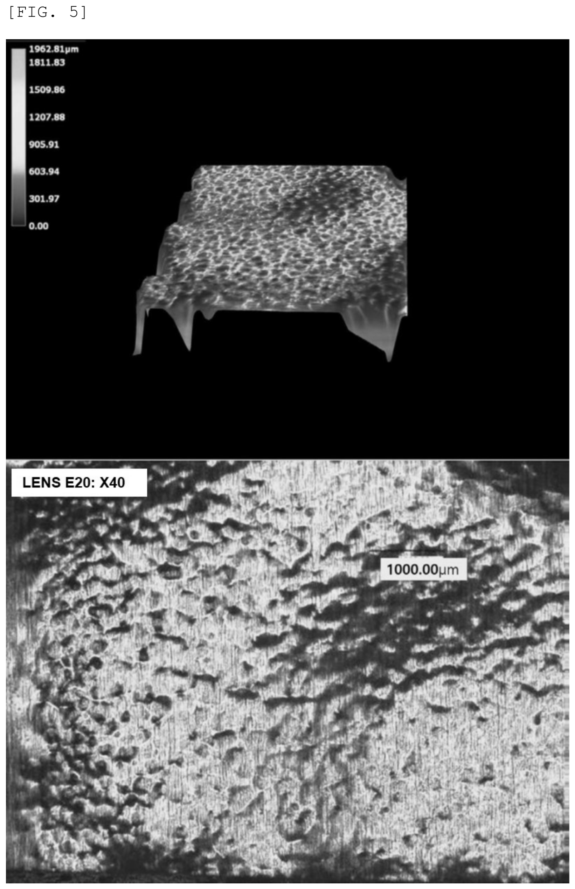

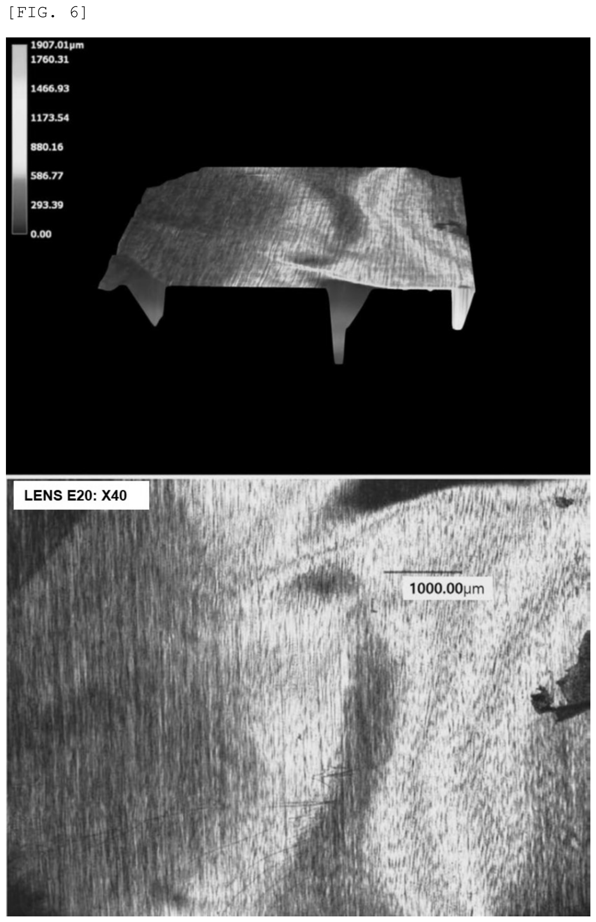

FIG. 5 showed the result from observation on the surface of the positive electrode current collector after the rolling, according to Example 1, and FIG. 6 showed the result from observation on the surface of the positive electrode current collector according to Comparative Example 1.
Referring to FIGS. 5 and 6, in case of the positive electrode current collector according to Example 1, it can be seen that the surface was roughened, but in case of the positive electrode current collector according to Comparative Example 1, it can be seen that almost no roughening was done.

Experimental Example 4: Measurement of MP Resistance

The positive electrode prepared according to each of Example 1 and Comparative Examples 1 to 3 was punched into a sample in a sheet of 5 cm wide and 5 cm tall, and for the sample, the MP resistance was measured using a multi probe resistivity measurement instrument.

[Table 2]

|  | MP resistance ($\Omega \cdot cm^2$) |
| --- | --- |
| Example 1 | 0.05 |
| Comparative Example 1 | 0.17 |
| Comparative Example 2 | 0.25 |
| Comparative Example 3 | 0.22 |

Referring to Table 2 above, in case of Example 1, where the lithium iron phosphate particle in a secondary particle form was used as a positive electrode active material, and the particle breakage strength satisfied a particular range, it can be seen that the MP resistance decreased significantly, unlike the case of the comparative examples. Through this, it can be seen that the positive electrode current collector was roughened to an excellent level through performing rolling using the lithium iron phosphate particle in a secondary particle form. In addition, through this, the contact area between the positive electrode active material and the positive electrode current collector was improved, and therefore, it can be expected that excellent high-rate discharge characteristics are exhibited.

Experimental Example 5: Resistance Evaluation

(Preparation of Secondary Battery)

A negative electrode active material (graphite), a conductive material (carbon black), a binder (SBR), and a thickener (CMC) were dispersed in water in a weight ratio of 93.5:2.0:1.0:3.5 to prepare a negative electrode slurry having a solid content of 50%. The negative electrode slurry was applied onto a copper foil having a thickness of 8 $\mu$m such that the loading amount became 160 mg/cm$^2$, and a negative electrode in a thickness of 145 $\mu$m was prepared.
The positive electrode prepared according to Example 1, a separator, and the negative electrode prepared as above were sequentially stacked to prepare an electrode assembly, then the electrode assembly was accommodated in a pouch-type battery case, and an electrolyte was injected thereto to prepare a pouch-type cell, according to Example 1, having a capacity of 5 Ah.
Pouch-type cells according to Comparative Examples 1 to 3 were prepared in the same method as that of Example 1, except that the positive electrodes according to Comparative Examples 1 to 3 were respectively used.

(Measurement of 0.1 second discharge resistance)

Formation was performed on the prepared pouch-type cell, the activated secondary battery was fully charged at SOC 100%, a discharge pulse of 2.5 C was applied to discharge the battery, and the voltage change after 0.1 seconds was measured and the 0.1 second discharge resistance $R_{0.1s}$ was measured. Through the 0.1 second discharge resistance ($R_{0.1s}$), the resistance between the current collector and the positive electrode active material layer can be checked. The results were listed in Table 3 below.

(Measurement of Ohmic resistance)

SOC 50% was set, and then using an electrochemical impedance spectroscopy (EIS) method, the Ohmic resistance (relative ohmic resistance) values of the pouch-type cells, prepared according to Example 1 and Comparative Examples 1 to 3 above, were measured. The results were listed in Table 3 below.

[Table 3]

|  | $R_{0.1s}$ (mQ) | Ohmic resistance (mQ) |
|---|---|---|
| Example 1 | 0.65 | 0.55 |
| Comparative Example 1 | 2.20 | 1.20 |
| Comparative Example 2 | 2.70 | 1.55 |
| Comparative Example 3 | 2.60 | 1.65 |

Referring to Table 3 above, it can be seen that the 0.1 second discharge resistance and the Ohmic resistance values of the positive electrode according to Example 1 were significantly lower than those of the comparative examples. Through this, it can be seen that in the positive electrode according to Example 1, the resistance between the positive electrode current collector and the positive electrode active material layer decreased, so that high level high-temperature discharge characteristics may be exhibited.

**Claims**

1. A preparation method of a positive electrode, comprising:

   preparing a positive electrode slurry including a positive electrode active material containing a lithium iron phosphate particle in a secondary particle form in which a plurality of primary particles is aggregated;
   applying the positive electrode slurry onto a positive electrode current collector; and
   performing rolling on the applied positive electrode slurry to form a positive electrode active material layer,
   wherein the lithium iron phosphate particle in a secondary particle form has a particle breakage strength of 4 kgf/mm$^2$ to 20 kgf/mm$^2$, and
   a ratio of a surface roughness $Rz_1$ of the positive electrode current collector before the performing of rolling to a surface roughness $Rz_2$ of the positive electrode current collector after the performing of rolling is 0.5 or less.

2. The preparation method of claim 1, wherein, by the performing of rolling, the positive electrode active material, included in the applied positive electrode slurry, roughens the positive electrode current collector.

3. The preparation method of claim 1, wherein the lithium iron phosphate particle in a secondary particle form has an average particle diameter ($D_{50}$) of 7 $\mu$m to 30 $\mu$m.

4. The preparation method of claim 1, wherein the primary particle has an average particle diameter ($D_{50}$) of 0.2 $\mu$m to 3 $\mu$m.

5. The preparation method of claim 1, wherein, by the performing of rolling on the applied positive electrode slurry, the lithium iron phosphate particle in a secondary particle form is broken into primary particles.

6. The preparation method of claim 1, wherein, after the performing of rolling, the surface roughness $Rz_2$ of the positive electrode current collector is 3 $\mu$m or greater.

7. The preparation method of claim 1, wherein, before the performing of rolling, the surface roughness $Rz_1$ of the positive electrode current collector is 1.5 $\mu$m or less.

8. The preparation method of claim 1, wherein the positive electrode active material layer has a rolling rate of 30% or greater.

9. The preparation method of claim 1, wherein the rolling is performed through roll press, and during the roll press, a line pressure is 30 kN/cm to 80 kN/cm.

10. The preparation method of claim 1, wherein the current collector includes aluminum.

11. The preparation method of claim 1, further comprising drying the applied positive electrode slurry between the applying of the positive electrode slurry and the performing of rolling on the applied positive electrode slurry.

12. A positive electrode comprising:

a positive electrode current collector; and
a positive electrode active material layer disposed on the positive electrode current collector,
wherein the positive electrode current collector has a surface roughness $Rz_2$ of 3 $\mu$m or greater,
the positive electrode active material layer includes a positive electrode active material,
the positive electrode active material includes a lithium iron phosphate particle, and
MP resistance, measured using a multi probe resistivity measurement instrument for a sample of the positive electrode punched into a sheet of 5 cm wide and 5 cm tall, is 0.1 $\Omega \cdot cm^2$ or less.

13. The positive electrode of claim 12, wherein the positive electrode active material layer has a porosity of 25% to 45%.

14. The positive electrode of claim 12, wherein the lithium iron phosphate particle exists in a primary particle form, or exists as a mixture of a primary particle and a secondary particle.

15. The positive electrode of claim 12, wherein, when the lithium iron phosphate particle is a mixture of a primary particle and a secondary particle, an amount of the primary particle is 90 wt% or greater and less than 100 wt% in the lithium iron phosphate particle.

16. The positive electrode of claim 12, wherein the positive electrode active material layer has a thickness of 50 $\mu$m to 500 $\mu$m.

17. The positive electrode of claim 12, wherein the positive electrode current collector and the positive electrode active material layer are directly in contact with each other.

18. A lithium secondary battery comprising:

the positive electrode according to claim 12;
a negative electrode opposed to the positive electrode;
a separator disposed between the positive electrode and the negative electrode; and
a non-aqueous electrolyte.

[FIG. 1]

5.0kV 7.9mm x10.0k                    5.00um

[FIG. 2]

[FIG. 3]

1.0kV 5.5mm x1.50k SE(U,LA40)                                    30.0um

[FIG. 4]

[FIG. 5]

[FIG. 6]

**EP 4 734 168 A1**

<table>
<tr><td colspan="2"><b>INTERNATIONAL SEARCH REPORT</b></td><td>International application No.<br><b>PCT/KR2024/020887</b></td></tr>
</table>

**A. CLASSIFICATION OF SUBJECT MATTER**

**H01M 4/1397**(2010.01)i; **H01M 4/04**(2006.01)i; **H01M 4/58**(2010.01)i; **H01M 4/66**(2006.01)i; **H01M 4/136**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/1397(2010.01); C22C 21/00(2006.01); H01M 4/04(2006.01); H01M 4/13(2010.01); H01M 4/139(2010.01); H01M 4/1391(2010.01); H01M 4/36(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(anode), 리튬 철 인산화물(lithium iron phosphate), 양극 활물질(anode active material), 압연(rolling), 표면 조도(surface roughness)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-067542 A (SUMITOMO OSAKA CEMENT CO., LTD.) 25 April 2019 (2019-04-25)<br>    See claims 1-7; and paragraphs [0004], [0035], [0037], [0072] and [0079]. | 1-18 |
| Y | JP 2013-026063 A (NIPPON FOIL MANUFACTURING CO., LTD. et al.) 04 February 2013 (2013-02-04)<br>    See claims 1, 6 and 7; and paragraphs [0028] and [0029]. | 1-18 |
| A | US 2016-0006018 A1 (APPLIED MATERIALS, INC.) 07 January 2016 (2016-01-07)<br>    See claims 1, 13 and 14. | 1-18 |
| A | KR 10-2014-0014361 A (SUMITOMO ELECTRIC INDUSTRIES, LTD.) 06 February 2014 (2014-02-06)<br>    See claims 1-3. | 1-18 |
| A | KR 10-2023-0099785 A (TERASYS. CO., LTD.) 05 July 2023 (2023-07-05)<br>    See claim 10. | 1-18 |

☑ Further documents are listed in the continuation of Box C.     ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/020887** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2004-0234858 A1 (TORIMAE, M. et al.) 25 November 2004 (2004-11-25)<br>    See claims 1-4. | 1-18 |

INTERNATIONAL SEARCH REPORT
Information on patent family members

International application No.

**PCT/KR2024/020887**

| Patent document cited in search report | | | Publication date (day/month/year) | Patent family member(s) | | | Publication date (day/month/year) |
|---|---|---|---|---|---|---|---|
| JP | 2019-067542 | A | 25 April 2019 | JP | 6332540 | B1 | 30 May 2018 |
| | | | | US | 10629908 | B2 | 21 April 2020 |
| | | | | US | 2019-0103610 | A1 | 04 April 2019 |
| JP | 2013-026063 | A | 04 February 2013 | JP | 5795895 | B2 | 14 October 2015 |
| US | 2016-0006018 | A1 | 07 January 2016 | CN | 105103339 | A | 25 November 2015 |
| | | | | CN | 105103339 | B | 09 January 2018 |
| | | | | JP | 2016-510939 | A | 11 April 2016 |
| | | | | KR | 10-2015-0126920 | A | 13 November 2015 |
| | | | | WO | 2014-164005 | A1 | 09 October 2014 |
| KR | 10-2014-0014361 | A | 06 February 2014 | CN | 102449814 | A | 09 May 2012 |
| | | | | EP | 2437332 | A1 | 04 April 2012 |
| | | | | EP | 2437332 | A4 | 22 January 2014 |
| | | | | US | 2012-0052383 | A1 | 01 March 2012 |
| | | | | WO | 2010-137381 | A1 | 02 December 2010 |
| KR | 10-2023-0099785 | A | 05 July 2023 | None | | | |
| US | 2004-0234858 | A1 | 25 November 2004 | CN | 1551385 | A | 01 December 2004 |
| | | | | JP | 2004-335344 | A | 25 November 2004 |
| | | | | KR | 10-2004-0096773 | A | 17 November 2004 |

Form PCT/ISA/210 (patent family annex) (July 2022)

**REFERENCES CITED IN THE DESCRIPTION**

**Non-patent literature cited in the description**

- *The Journal of the Mining and Metallurgical Institute of Japan*, December 1965, vol. 81 (932), 1024-1030